# EUROPEAN PATENT SPECIFICATION

(11) **EP 3 366 500 B1**
(45) Date of publication and mention of the grant of the patent: **06.01.2021**
(21) Application number: 18158228.9
(22) Date of filing: 22.02.2018
(51) Int. Cl.: B60G 9/00, B60G 11/27

(54) **DEVICE FOR LIMITING THE HANGING OF A REBOUNDED AXLE OF A VEHICLE**
VORRICHTUNG ZUR BEGRENZUNG DER HÄNGUNG EINER GEFEDERTEN ACHSE EINES FAHRZEUGS
DISPOSITIF PERMETTANT DE LIMITER LA SUSPENSION D'UN ESSIEU REBONDI D'UN VÉHICULE

(30) Priority: 22.02.2017 IT 201700020136
(43) Date of publication of application: 29.08.2018
(73) Proprietor: IVECO MAGIRUS AG, 89079 Ulm (DE)
(72) Inventor: GÜNGÜL, Timur, 82256 Fürstenfeldbruck (DE); SCHÄDLE, Markus, 88299 LEUTKIRCH (DE); KONRAD, Christian, 89269 VÖHRINGEN (DE); WÖRNER, Gerhard, 89079 ULM (DE)
(74) Representative: Bongiovanni, Simone

(56) References cited:
- EP-A1- 2 821 264
- WO-A1-01/70525

## Description

### PRIORITY CLAIM

This application claims priority from Italian Patent Application No. 102017000020136 filed on February 22, 2017.

The present invention concerns a device for limiting the hanging of a rebounded axle of a vehicle, in particular it is related to a device for limiting the hanging of a rebounded axle of a vehicle for off-road vehicles.

As known, some vehicles are designed for example for off-road applications. These vehicles, such as for example those used for defense and civil protection applications, are subjected to high stresses due to the impervious paths along which they run.

On this regard the axles of the vehicles, for example the rear axles, are subjected to frequent rebounds. The expression "rebounds" wants to indicated substantially a relative movement of an axle with respect to the chassis of the vehicle.

It is clear that for these vehicles the design of the suspension groups is a factor particularly critical especially if the suspensions groups comprise shock absorbers. Indeed, in this case the shock absorbers define a lower limit for the rebounds of the axle. Such lower limit is established substantially by the maximum extension of the absorbers. However when this condition is reached, the absorbers are seriously stressed.

From document EP2821264 A1 it is known to use a device for limiting the hanging of a rebounded axle on a vehicle, comprising a stopping device provided by first and second stop elements comprising respectively a flexible belt and first and second connection means to connect each of the extremities of the belts to an element joint to the axle and to an element fixed to the chassis of the vehicle respectively.

The presence of two belts guarantee a substantially equal repartition of loads and permits to the stopping device to support high loads. However, the set-up of the stopping device as previously described is not easy nor immediate.

In fact, in order to guarantee an equal repartition of the forces into the two belts, the stop elements need to be at the same pretension, despite all possible manufacturing tolerances and position-differences.

In order to achieve the aforementioned condition, one of the two stop elements has a fixed length and the other has a length which is adjustable through adjustable fixing means, in order to compensate all tolerances and position-differences within said stop elements.

The set-up comprises a first step in which the belt of the first stop element (the fixed length one) is put in a slightly tensioned state and a second step in which the length of the second stop element is adjusted consequently to the reached tensioned state of said belt.

However, such set-up procedure is complex and cannot be easily reproduced by the user, e.g. if one of the belts fails and must be substituted. In fact, the aforementioned tensioning condition is achieved by fixed position of rebounding of the axle, which is not easy to be handled by the vehicle user alone. In fact, the set-up must be done with additional lifting-tools, in order to lift the chassis.

Therefore, the need is felt to have a device for limiting the hanging of a rebounded axle which could be easily mounted and set-up on a plane ground.

An aim of the present invention is to satisfy the above mentioned need.

The aforementioned aim is reached by device for limiting the hanging of a rebounded axle of a vehicle as claimed in claim 1 and by a corresponding method according to claim 8.

For a better understanding of the present invention, a preferred embodiment is described in the following, by way of a non-limiting example, with reference to the attached drawings wherein:
- Figure 1 is a lateral plan view of a device for limiting the hanging of a rebounded axle of a vehicle according to the present invention;
- Figure 2 is a portion of the lateral plan view of the device of figure 1;
- Figure 3 is an enlarged perspective view of a portion of the device of figure 1; and
- Figure 4 is a detail view of an element comprised by the device of figure 1.

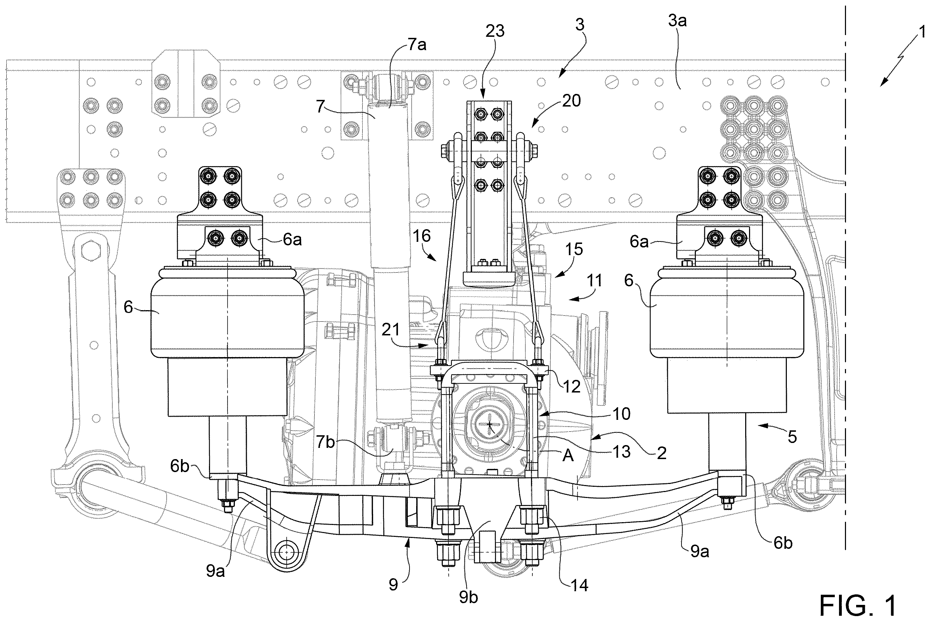

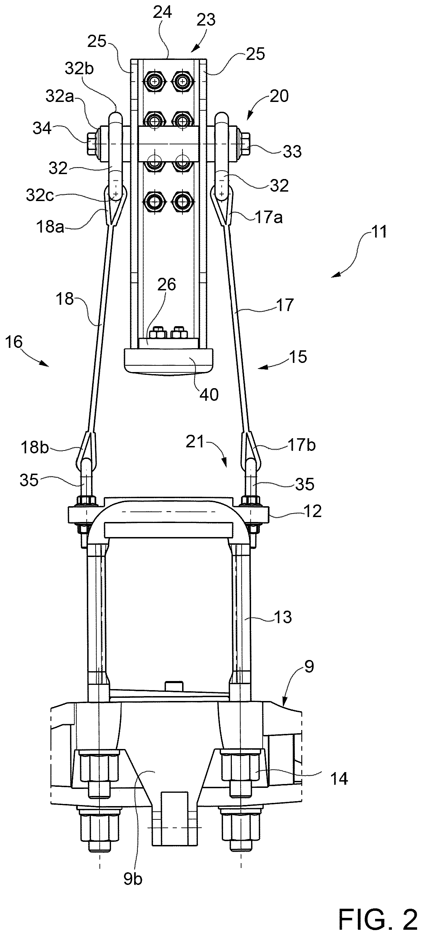

Figures 1-3 show an embodiment of a device 1 according to the present invention on an off-road vehicle for limiting the hanging of a rebounded axle 2 of the same vehicle.

For sake of clarity figure 1 shows only a rear axle 2 of a vehicle, however the present invention may be applied to both rear and front axles.

The device 1 is preferably installed on a vehicle comprising a chassis 3 having a couple of side members 3a according to a typical solution in the field of trucks for defense and civil protection applications.

The device 1 comprises a suspension system 5 which includes, for example, two air bellows 6 and a shock absorbers 7. In the following, the suspension system 5 is described hereinafter for only one side of the truck, e.g. the left-truck side. However, it is clear to one skilled in the art that the same system is obviously present on the opposite truck side, e.g. the right-truck side.

More preferably, the air bellows 6 and the shock absorber 7 are mounted on a suspension supporting arm 9 which is connected to the axle 2 by means of a connection assembly 10.

More in detail, the arm 9 is arranged below the axle 2 and develops laterally along a transversal direction with respect to a longitudinal axis A of the axle 2, substantially parallel to the side member 3a. The arm 9 comprises a central portion 9b, substantially positioned below the axle 2 and two terminal portions 9a extending from the central portion 9b.

The air bellow 6 comprises an upper end 6a configured to be connected to the side member 3a and a lower end 6b configured to be connected to one of the terminal portions 9a of the suspension supporting arm 9.

Similarly, the shock absorber 7 is connected at its upper end 7a to the side member 3a and at its lower end 7b to the arm 9 in a position between one of its terminal part 9a and a central portion 9b between said terminal parts 9a.

Advantageously, the suspension system 5 is a so-called "ECAS", i.e. "Electronically Controlled Air Suspension".

As per se known, ECAS systems comprise a mechanical unit configured to adjust the air-pressure of the air-bellows in order to hold or vary the height of the suspension itself and an electronic unit configured to automatically control the aforementioned mechanical unit.

The ECAS electronic unit may be preferably connected to a central control unit of the vehicle.

The connection assembly 10 comprises a plate 12, configured to be arranged over the axle 2, and a couple of U-shaped brackets 13 which are bolted to the central portion 9b of the suspension supporting arm 9.

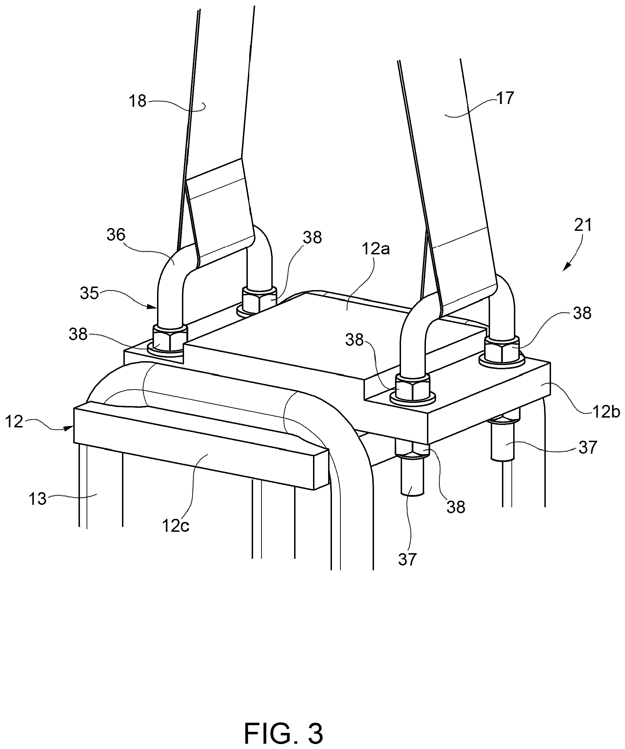

Preferably, the plate 12 (see figure 3) is substantially a parallelepiped comprising a central portion 12a, first lateral portions 12b and second lateral portions 12c. The first and second lateral portions 12b, 12c have a lower thickness with respect to the central portion 12a.

Advantageously, the first lateral portions 12b are opposite each other and extends with respect to the central portion 12a in a direction which is parallel to the extension direction of the supporting arm 9.

Moreover, the second lateral portions 12c are opposite each other and extends with respect to the central portion 12a in a direction which is perpendicular with respect to the direction of extension of the first lateral portions 12b. More preferably, the plate 12 is symmetric and the first lateral portions 12b are placed in an upper position with respect to the second lateral portions 12c.

Preferably, the plate 12 is monolithic, nevertheless it may be realized by more pieces which can be welded together.

The U-brackets 13 are arranged over the plate 12 so that can be housed in corresponding seats defined in said second lateral portions 12c. For each end of the U-shaped brackets 13, a corresponding closing nut 14 is provided to fix the central portion 9b against the lower part of the axle 2.

Advantageously, the device 1 (figures 1, 2 and 4) comprises a stopping device 11 provided by a first stop element 15 and a second stop element 16 including respectively a first belt 17 and a second belt 18.

The first and the second stop elements 15, 16 comprises moreover first connecting means 20 configured to fixedly connect the upper ends 17a, 18a of the belts 17, 18 to the side member 3a of the chassis 3 and second connecting means configured to adjustably connect the lower ends 17b, 18b of the belts 17, 18 to said plate 12.

The first connecting means 20 preferably comprise a stirrup 23 essentially comprising a connecting wall 24 configured to be fixed to said side member 3a and a pair of lateral walls 25 opposite each other and extending from the lateral edges of the connecting wall 24 outwards and substantially perpendicular with respect to the side member 3a.

The lower ends of the pair of lateral walls 25 may be connected by a bottom wall 26 which is substantially perpendicular to the lateral walls 25 and to the connecting wall 24.

The connecting wall 24 may be connected to the side member 3a by bolts or by welding or by any known typology of fixing means.

The first connecting means 20 comprises moreover a metallic link 32 preferably having a substantial triangular shape. More preferably the link 32 comprises a seat 32a, positioned at one vertex 32b and inside the triangular shape of the link 32, having a substantial circular shape. Advantageously, the seat 32a is integrally realized with the link 32, preferably it is welded on the seat 32a, and may be provided by a through-hole to allow the passage of a screw 33 inside it.

Such a screw 33 can be insert inside the seat 32a of one the links 32 and get out from the seat 32a of the opposite link 32. A nut 34 may fix the screw 33, and therefore the links 32, to the lateral walls 25 of the stirrup 23.

In order to improve the stiffness of the structure, a cylindrical bushing may be housed between the two lateral walls 25 and configured to internally house the screw 33.

An edge 32c of the link 32 opposite to seat 32a is configured to house around it a span of said flexible belts 17, 18.

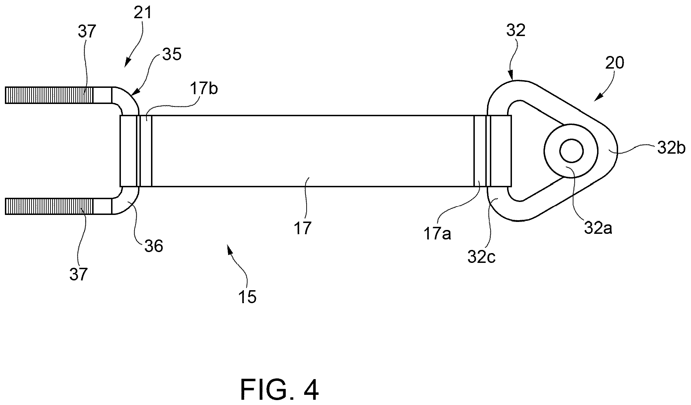

The second connecting means 21 (figure 3 and 4) preferably comprise a metallic wing 35 being substantially U-shaped. The wing 35 comprises a seat side 36 configured to house a span of said flexible belt 17, 18 and a couple of lateral sides 37 extending substantially perpendicular from the seat side 36.

The two lateral sides 37 are configured to get through corresponding holes realized in the first lateral portions 12b of the plate 12.

A portion of the lateral sides 37 is threaded and it is configured to receive nuts 38, advantageously upper and lower nuts 38 with respect to lateral portions 12b configured to adjust the portion of the lateral sides 37 which come out the lateral portions 12b. Consequently, the length of the first and second stopping member 15, 16 is varied by the aforementioned setting.

Finally, the stopping device 11 may comprise a buffer 40 housed beneath the bottom wall 26 of the stirrup 23 configured to avoids direct impact between the stirrup 23 and the plate 12 when the axle 2 moves up.

Advantageously the belts 17, 18 are realized in a flexible material and have the same fixed length. Advantageously the terminal ends 17a, 17b, 18a, 18b of the belts 17, 18 may comprise a loop realized by sewing a terminal portion of a belt 17, 18 on the belt 17, 18 itself.

The invention moreover relates to a set-up method for a device 1 for limiting the hanging of a rebounded axle 2 as aforementioned described.

The method comprises the steps of:
- fixing one end 17a, 18a of the first and second stop members 15, 16 to said side member 3a by the first connecting means 20;
- lifting the ECAS suspension system 5 to a predetermined level;
- connecting the other end 17b, 18b of the first and second stop members 15, 16 to the plate 12 which is joint to the axle 2 via the connection assembly 10 by the second connecting means 21;
- adjusting the length of the first and second stop members 15, 16 thanks to the second connecting means 21 at the level consequent to the aforementioned predetermined level set by the suspension system 5.

The predetermined level may be set by a user (the driver of the vehicle, a worker of the manufacturing line..) and it is preferably lower or at least equal to the maximum extension level of the suspension system 5 in order to avoid damages to the suspension system 5 itself.

In view of the foregoing, the advantages of a device 1 according to the invention are apparent.

A device 1 according to the present invention allows to use two identical stop elements 15, 16 therefore simplifying the manufacturing of the stopping device 11 and avoiding mounting errors. Moreover, two identical stop elements 15, 16 having the same nominal length, allow a cost reduction for manufacturing the suspension system.

The plate 12 which is joint by the connection assembly 10 to the axle 2, has a symmetric shape and therefore it simple and economic to be manufactured.

The set-up method for the aforementioned stopping device 11 which uses the ECAS suspension system 5 allows a quick and easy set-up of the stopping device 11 on a plane ground.

Such set-up procedure can be simply carried also by the user of the vehicle if one of the belts 17, 18 accidentally fails during the use of the vehicle. In fact, the truck don't have to be driven to a repair-station, in order to lift the chassis, therefore the repair-costs and time can be reduced, because the ECAS-system of the truck can lift the chassis for the set-up.

It is clear that modifications can be made to the described stopping device 1 which do not extend beyond the scope of protection defined by the claims.

For example, the shapes of the link 32 or of the swing 35, or of the plate 12 may be varied without changing their functionalities.

Again, the second connecting means 21 may be realized using other adjustable connecting means, such as a plug mechanism. Moreover each of the first and second stop elements 15, 16 may comprise more than one belt 17, 18.

## Claims

1. Device for limiting the hanging of a rebounded axle (2) on a vehicle, said vehicle comprising a chassis (3) provided with a couple of side members (3a), said device comprising a suspension system (5) connecting the axle (2) and said side members (3a) and a stopping device (11), said stopping device (11) comprising:
- a first stop element (15) including at least one first flexible belt (17), first connecting means (20) and second connecting means (21), each said first and second connecting means (20, 21) being configured to respectively be connected to the upper and the lower ends (17a, 17b) of said at least one belt (17);
- a second stop element (16) including at least one second flexible belt (18), first connecting means (20) and second connecting means(21), each said first and second connecting elements (20, 21) being configured to respectively be connected to the upper and the lower ends (18a, 18b) of said at least one belt (18);
said first connecting means (20) being configured for fixedly connecting said upper ends (17a, 18a) of the first and the second stop elements (15, 16) to said side member (3a) of said chassis (3);
**characterized in that** said suspension system (5) is an Electronically Controlled Air Suspension (ECAS) system and **in that** said second connecting means (21) are configured to adjustably connect said lower ends (17b, 18b) of said first and the second stop elements (15, 16) to an element (12) joint to the axle (2), said second connecting means (21) being configured to vary the set-up length of said first and second stop elements (15, 16) in function of a predetermined set-up extension level of said ECAS suspension system (5).

2. Device according to claim 1, **characterized in that** said first connecting means (20) comprise a link (32) having a triangular shape, said link (32) comprising a seat (32a) placed at one vertex (32b) of said triangular shape configured to be fixedly connected by a screw (33) to a stirrup (23) joint to said side member (3a), said link further comprising one side (32c) opposite to said vertex (32b) which is configured to house a span of said belt (17;18).

3. Device according to claim 1 or 2, **characterized in that** said second connecting means (21) comprises a U-shaped wing (35), said wing (35) comprising a back side (36) which is configured to house a span of said belt (17;18) and two opposite lateral sides (37) which are configured to be adjustably connected to said element (12) joint to said axle (2) .

4. Device according to claim 3, **characterized in that** said adjustable connection is realized by a threaded connection realized between a threaded portion of said lateral sides (37) of said wing (35) and a couple of nuts (38) among which the element (12) is interposed.

5. Device according to any of the preceding claims, **characterized by** comprising a buffer (40) joint to one between said element (23) joint to said chassis (3) and said element (12) joint to said axle (3).

6. Device according to any of the preceding claims, **characterized in that** said ECAS suspension system (5) comprises at least an air bellow (6).

7. Device according to any of the preceding claims, **characterized in that** said suspension system (5) is provided for a left and a right side of said vehicle.

8. Method for setting up a stopping device (11) for limiting the hanging of a rebounded axle (2) on a vehicle according to any of the preceding claims, said method comprising the steps of:
• fixing the upper ends (17a, 18a) of the first and second stop members (15, 16) to said side member (3a) by said first connecting means (20);
• lifting the ECAS suspension systems (5) to a predetermined level;
• connecting the lower ends (17b, 18b) of the first and second stop members (15, 16) to said axle by said second connecting means (21);
• adjusting the length of said first and second stop members (15, 16) by said second connecting means (21) at a level consequent to said predetermined level of said ECAS suspension systems (5).

9. Method according claim 8, **characterized in that** said predetermined level is lower or at least equal to the maximum extension level of the ECAS suspension system (5).

## Patentansprüche

1. Vorrichtung zur Begrenzung der Aufhängung einer gefederten Achse (2) eines Fahrzeugs, wobei das Fahrzeug ein Fahrgestell (3) umfasst, das mit einem Paar von Seitenteilen (3a) ausgeführt ist, wobei die Vorrichtung ein Aufhängungssystem (5) umfasst, das die Achse (2) und die Seitenteile (3a) und eine Begrenzungsvorrichtung (11) umfasst, wobei die Begrenzungsvorrichtung (11) umfasst:
- ein erstes Begrenzungsteil (15), umfassend mindestens einen flexiblen Gurt (17), erste Verbindungsmittel (20) und zweite Verbindungsmittel (21), wobei jedes der ersten und zweiten Verbindungsmittel (20, 21) ausgeführt ist, um jeweils mit den oberen und unteren Enden (17a, 17b) des mindestens einen Gurtes (17) verbunden zu werden;
- ein zweites Begrenzungsteil (16), umfassend mindestens einen flexiblen Gurt (18), erste Verbindungsmittel (20) und zweite Verbindungsmittel (21), wobei jedes der ersten und zweiten Verbindungsmittel (20, 21) ausgeführt ist, um jeweils mit den oberen und unteren Enden (18a, 18b) des mindestens einen Gurtes (18) verbunden zu werden;
wobei die Verbindungsmittel (20) ausgeführt sind, um die oberen Enden (17a, 18a) des ersten und des zweiten Begrenzungsteils (15, 16) mit dem Seitenteil (3a) des Fahrgestells (3) fest zu verbinden;
**dadurch gekennzeichnet, dass** das Federungssystem (5) ein elektronisch geregeltes Luftfederungssystem (ECAS) ist und dass die zweiten Verbindungsmittel (21) ausgeführt sind, um die unteren Enden (17b, 18b) des ersten und zweiten Begrenzungsteils (15, 16) mit einem Teil (12) verstellbar zu verbinden, das mit der Achse (2) verbunden ist,
wobei die zweiten Verbindungsmittel (21) ausgeführt sind, um die Einrichtungslänge des ersten und zweiten Begrenzungsteils (15, 16) in Abhängigkeit von einem vorbestimmten Einrichtungs-Längenwert des ECAS-Federungssystems (5) zu ändern.

2. Vorrichtung nach Anspruch 1, **dadurch gekennzeichnet, dass** die ersten Verbindungsmittel (20) ein Verbindungsstück (32) mit einer dreieckigen Form umfassen, wobei das Verbindungsstück (32) eine Aufnahme (32a) umfasst, die an einem Scheitelpunkt (32b) der dreieckigen Form angeordnet ist und ausgeführt ist, um durch eine Schraube (33) fest mit einem Bügel (23) verbunden zu werden, der mit dem Seitenteil (3a) verbunden ist, wobei das Verbindungsstück weiter eine Seite (32c) gegenüber dem Scheitelpunkt (32b) umfasst, die ausgeführt ist, um eine Breite des Gurtes (17; 18) aufzunehmen.

3. Vorrichtung nach Anspruch 1 oder 2, **dadurch gekennzeichnet, dass** die zweiten Verbindungsmittel (21) einen U-förmigen Ausleger (35) umfassen, wobei der Ausleger (35) eine Rückseite (36), die ausgeführt ist, um eine Breite des Gurtes (17; 18) aufzunehmen, und zwei sich gegenüberliegende laterale Seiten (37) umfasst, die ausgeführt sind, um verstellbar mit dem mit der Achse (2) verbundenem Teil (12) verbunden zu werden.

4. Vorrichtung nach Anspruch 3, **dadurch gekennzeichnet, dass** die verstellbare Verbindung durch eine Gewindeverbindung zwischen einem Gewindeabschnitt der lateralen Seiten (37) des Auslegers (35) und zwei Muttern (38) verwirklicht wird, zwischen denen das Teil (12) angeordnet ist.

5. Vorrichtung nach einem der vorstehenden Ansprüche, **dadurch gekennzeichnet, dass** diese einen Puffer (40) umfasst, verbunden mit dem Teil (23), das mit dem Fahrgestell (3) verbunden ist oder dem Teil (12), das mit der Achse (3) verbunden ist.

6. Vorrichtung nach einem der vorstehenden Ansprüche, **dadurch gekennzeichnet, dass** das ECAS-Federungssystem (5) mindestens einen Luftbalg (6) umfasst.

7. Vorrichtung nach einem der vorstehenden Ansprüche, **dadurch gekennzeichnet, dass** das Federungssystem (5) für eine linke und eine rechte Seite des Fahrzeugs vorgesehen ist.

8. Verfahren zur Einrichtung einer Begrenzungsvorrichtung (11) zur Begrenzung der Aufhängung einer gefederten Achse (2) eines Fahrzeugs nach einem der vorstehenden Ansprüche, wobei das Verfahren die Schritte umfasst:
• Befestigen der oberen Enden (17a, 18a) der ersten und zweiten Begrenzungsteile (15, 16) an dem Seitenteil (3a) mittels der ersten Verbindungsmittel (20);
• Heben des ECAS-Federungssystems (5) auf einen vorbestimmten Wert;
• Verbinden der unteren Enden (17b, 18b) der ersten und zweiten Begrenzungsteile (15, 16) mit der Achse mittels der zweiten Verbindungsmittel (21);
• Einstellen der Länge der ersten und zweiten Begrenzungsteile (15, 16) mittels der zweiten Verbindungsmittel (21) auf einen Wert entsprechend dem vorbestimmten Wert des ECAS-Federungssystems (5).

9. Verfahren nach Anspruch 8, **dadurch gekennzeichnet, dass** der vorbestimmte Wert niedriger oder mindestens gleich dem maximalen Längenwert des ECAS-Federungssystems (5) ist.

## Revendications

1. Dispositif pour limiter la suspension d'un essieu rebondi (2) sur un véhicule, ledit véhicule comprenant un châssis (3) prévu avec une paire d'éléments latéraux (3a), ledit dispositif comprenant un système de suspension (5) raccordant l'essieu (2) et lesdits éléments latéraux (3a) et un dispositif de butée (11), ledit dispositif de butée (11) comprenant :
un premier élément de butée (15) comprenant au moins une première courroie flexible (17), des premiers moyens de raccordement (20) et des seconds moyens de raccordement (21), chacun desdits premiers et seconds moyens de raccordement (20, 21) étant configuré pour être respectivement raccordé aux extrémités supérieures et inférieures (17a, 17b) de ladite au moins une courroie (17) ;
un second élément de butée (16) comprenant au moins une seconde courroie flexible (18), des premiers moyens de raccordement (20) et des seconds moyens de raccordement (21), chacun desdits premiers et seconds éléments de raccordement (20, 21) étant configuré pour être respectivement raccordé aux extrémités supérieures et inférieures (18a, 18b) de ladite au moins une courroie (18) ;
lesdits premiers moyens de raccordement (20) étant configurés pour raccorder, de manière fixe, lesdites extrémités supérieures (17a, 18a) des premier et second éléments de butée (15, 16) audit élément latéral (3a) dudit châssis (3) ;
**caractérisé en ce que** ledit système de suspension (5) est un système de suspension pneumatique à commande électronique (ECAS) et **en ce que** lesdits seconds moyens de raccordement (21) sont configurés pour raccorder, de manière ajustable, lesdites extrémités inférieures (17b, 18b) desdits premier et second éléments de butée (15, 16) à un élément (12) joint à l'essieu (2), lesdits seconds moyens de raccordement (21) étant configurés pour modifier la longueur d'installation desdits premier et second éléments de butée (15, 16) en fonction d'un niveau d'extension d'installation prédéterminé dudit système de suspension ECAS (5).

2. Dispositif selon la revendication 1, **caractérisé en ce que** lesdits premiers moyens de raccordement (20) comprennent une liaison (32) ayant une forme triangulaire, ladite liaison (32) comprenant un siège (32a) placé au niveau d'un sommet (32b) de ladite forme triangulaire, configuré pour être raccordé de manière fixe par une vis (33) à un étrier (23) joint audit élément latéral (3a), ladite liaison comprenant en outre un côté (32c) opposé audit sommet (32b) qui est configuré pour loger une envergure de ladite courroie (17 ; 18).

3. Dispositif selon la revendication 1 ou 2, **caractérisé en ce que** ledit second moyen de raccordement (21) comprend une aile en forme de U (35), ladite aile (35) comprenant un côté arrière (36) qui est configuré pour loger une envergure de ladite courroie (17 ; 18) et deux côtés latéraux (37) opposés qui sont configurés pour être raccordés de manière ajustable audit élément (12) joint audit essieu (2).

4. Dispositif selon la revendication 3, **caractérisé en ce que** ledit raccordement ajustable est réalisé par un raccordement fileté réalisé entre une partie filetée desdit côtés latéraux (37) de ladite aile (35) et une paire d'écrous (38) parmi lesquels l'élément (12) est intercalé.

5. Dispositif selon l'une quelconque des revendications précédentes, **caractérisé en ce qu'**il comprend un tampon (40) joint à l'un entre ledit élément (23) joint audit châssis (3) et ledit élément (12) joint audit essieu (3).

6. Dispositif selon l'une quelconque des revendications précédentes, **caractérisé en ce que** ledit système de suspension ECAS (5) comprend au moins un soufflet pneumatique (6).

7. Dispositif selon l'une quelconque des revendications précédentes, **caractérisé en ce que** ledit système de suspension (5) est prévu pour un côté gauche et un côté droit dudit véhicule.

8. Procédé pour installer un élément de butée (11) pour limiter la suspension d'un essieu rebondi (2) sur un véhicule selon l'une quelconque des revendications précédentes, ledit procédé comprenant les étapes suivantes :
fixer les extrémités supérieures (17a, 18a) des premier et second éléments de butée (15, 16) audit élément latéral (3a) par lesdits premiers moyens de raccordement (20) ;
lever les systèmes de suspension ECAS (5) jusqu'à un niveau prédéterminé ;
raccorder les extrémités inférieures (17b, 18b) des premier et second éléments de butée (15, 16) audit essieu par lesdits seconds moyens de raccordement (21) ;
ajuster la longueur desdits premier et second éléments de butée (15, 16) par lesdits seconds moyens de raccordement (21) à un niveau en accord avec ledit niveau prédéterminé desdits systèmes de suspension ECAS (5).

9. Procédé selon la revendication 8, **caractérisé en ce que** ledit niveau prédéterminé est inférieur ou au moins égal au niveau d'extension maximum du système de suspension ECAS (5).
